Europäisches Patentamt

European Patent Office

Office européen des brevets

(19)

(11) Publication number: 0 049 100
A2

# (12) EUROPEAN PATENT APPLICATION

(21) Application number: 81304372.6

(51) Int. Cl.³: B 41 J 3/04

(22) Date of filing: 23.09.81

(30) Priority: 26.09.80 US 191186

(43) Date of publication of application: 07.04.82
Bulletin 82/14

(84) Designated Contracting States: DE FR GB NL

(71) Applicant: NCR CANADA LTD - NCR CANADA LTEE,
6865 Century Avenue, Mississauga Ontario,
L5N 2E2 (CA)

(72) Inventor: Brooks, Ralf Maynard, Apt. 304 520 Parkside
Drive, Waterloo Ontario N2L 5E3 (CA)
Inventor: Osmera, Miroslav Sidney, 46 Roslin Ave. South,
Waterloo Ontario N2L 2G8 (CA)

(74) Representative: Robinson, Robert George, International
Patent Department NCR Limited 206 Marylebone Road,
London NW1 6LY (GB)

(54) Non-Impact bar code printer and method of printing bar codes.

(57) A non-impact bar code printer and printing method in
which a record medium (52) and a thermally sensitive ribbon
(54) are placed between a pair of electrodes (56, 58) at least
one of which comprises a plurality of needle electrodes (62)
disposed in a linear array, and an electrical potential is pro-
duced across the electrodes of a magnitude causing a flow of
discharge current therebetween affecting heating of the rib-
bon and transfer and bondage of ink to the record medium.
Control means are provided for controlling the duration of said
discharge current flow so as to determine the width of each
printed bar.

EP 0 049 100 A2

- 1 -

Non-Impact Bar Code Printer and Method of Printing Bar
Codes

## Technical Field

The invention relates to a non-impact bar code printer and to a method of printing bar codes in non-impact manner.

## Background

In the field of non-impact printing, the most common types of printers have been the thermal printer and ink jet printer. When the performance of a non-impact printer is compared with that of an impact printer one of the problems in the non-impact machine has been the control of the printing operation. As is well know, the impact operation depends on the movement of impact members such as wires or the like and which are typically moved by means of an electro mechanical system which is believed to enable a more precise control of the impact members.

The advent of non-impact printing, as in the case of thermal printing, brought out the fact that the heating cycle must be controlled in a manner to obtain maximum repeated operations. Likewise, the control of ink jet printing in at least one form thereof must deal with rapid starting and stopping movement of the ink fluid from a supply of the fluid. In each case, the precise control of the thermal element and of the ink droplets is necessary to provide for both direct and high speed printing.

Another type or non-impact printer is the electrophoretic printer, such as disclosed, for instance, in U.S. Patent No. 4,222,459. In printers of this kind an ink carrying ribbon and paper are passed between a pair of electrodes and an electric field is generated between the electrodes to transfer particles of ink on to the paper.

While the printer described in this patent would be capable of printing bars, there are no provisions therein for influencing the width of a printed bar and, in particular, for printing bar codes including bars of different widths.

Disclosure of Invention

It is an object of the invention to provide a non-impact bar code printer which is fast in operation and which is capable of controlling the width of each printed bar.

Thus, according to the invention there is provided a non-impact bar code printer including first and second electrode means spaced from one another to provide an air gap therebetween for accommodating in operation an ink bearing means and a record medium, and generating means for producing an electric field between said first and second electrode means to cause transfer of ink particles from said ink bearing means to the record medium, characterized in that said generating means is arranged to produce an electrical potential across said first and second electrode means of a magnitude exceeding the gap breakdown voltage causing a flow of discharge current therebetween affecting heating of said ink bearing means and transfer and bonding of ink material to said second medium, and in that control means are provided for controlling the duration of said discharge current flow so as to determine in operation the width of each printed bar.

According to another aspect of the invention, there is provided a method of printing a bar code on a record medium by placing the second medium and ink bearing means between electrically conducting electrode means having an air gap therebetween and producing an electrical field between the electrode means to cause transfer of ink particles from said ink bearing means to the record

- 3 -

medium, characterized by producing an electrical potential across said electrode means of a magnitude exceeding the gap breakdown voltage so as to cause a flow of discharge current therebetween which current effects heating of said ink bearing means and transfer and bonding of ink material to said record medium, and controlling the duration of said discharge current flow so as to determine the width of each printed bar.

In one embodiment of the invention, one of the electrode means is in the form of a plurality of needle electrodes disposed in a linear array. The needle electrodes are connected to a high voltage power supply and are separated from a collecting electrode by a certain distance defining a gap in which are positioned a thermally sensitive ribbon and paper.

The initiation and the duration of the electrical discharge is controlled by a switching means for a controlled period of time such that a high voltage is maintained across a predetermined gap. When electrical breakdown occurs between the electrodes, the resultant heating causes transfer and bonding of the ribbon material to the paper. The duration of time that the high voltage is maintained across the gap determines the width of the bars printed in a bar code.

When the control circuit is actuated, the collecting electrode is at ground potential thus allowing a strong electrical field to be set up across the gap to break down the gap and to generate the current flow and cause transfer of the ink from the ribbon to the paper. The high voltage supply consists of a plurality of voltage stages operating in a charging cycle and a multiplying cycle wherein a number of capacitors are charged in parallel manner during the charging cycle and the capacitors are connected in series during the multiplying time period.

The invention provides a method for non-impact and noncontact encoding or printing in that pressure is not required between the ink donor and the recipient paper. The print transfer transpires as a result of electrical breakdown of an air gap between the electrodes in that current flow is required to effect ink transfer from the thermal sensitive ribbon to the paper. An additional advantage of the present invention is that the receiving medium is plain paper and does not require the use of specially developed or treated paper. A single high voltage source for all electrodes is sufficient for repeated printing of

- 4 -

the bar code and the width of the bar is controlled by TTL level control signals. The high voltage DC pulse is placed between the two conducting electrodes so that, when the gap sparking potential is exceeded, an electric field is set up in the air gap, the resultant heating from the current pulse or flow transfers the ink from the thermal sensitive ribbon by the electric driving field and fuses or embeds the ink particles into the plain paper for printing or encoding a bar code pattern.

Brief Description of the Drawings

Embodiments of the invention will now be described, by way of a example, with reference to the accompanying drawings, in which:

Fig. 1 is a diagrammatic view of one embodiment of the invention for printing in non-impact manner by means of electric discharge across a predetermined gap;

Fig. 2 is a diagrammatic view of another embodiment for non-impact printing on a thicker document;

Fig. 3 is a circuit showing the charging cycle;

Fig. 4 is a circuit showing the multiplying cycle; and

Fig. 5 is a circuit showing details of the cycles in Figs. 3 and 4.

Best Mode of Carrying Out the Invention

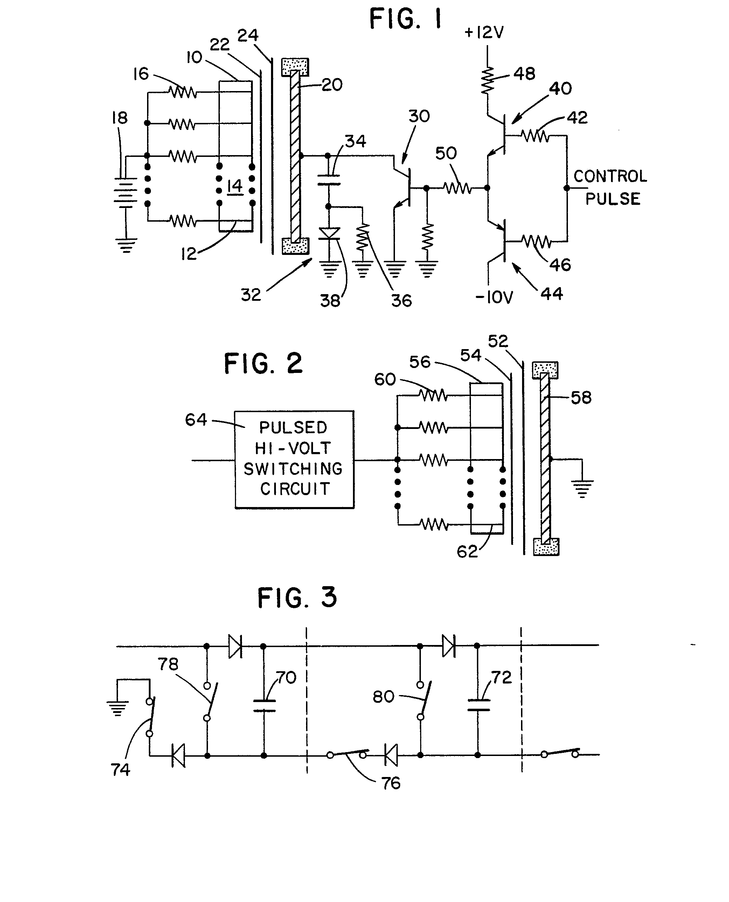

Fig. 1 shows in diagrammatic form a print head 10 having a plurality of needle electrodes 12 arranged in a vertical column and embedded in insulating material 14. The needle electrodes are made of conductive material such as silver, copper or platinum in the form of slender rods which are 0.25 millimeters in diameter and are spaced from each other at a distance of 0.125 millimeters. The insulating material 14 has a high resistivity characteristic such as found in epoxy, aluminium oxide or silicon.

Each needle electrode 12 is connected to a respective current limiting resistor 16 in parallel manner with respect to a supply voltage for the purpose of limiting the total current supplying capability of the power supply under the condition when all the electrodes are discharged simultaneously. The equal-valued resistors 16 are connected together on one side to a high voltage power supply 18. In the case of eight of the electrodes 12 being positioned in the column and the power supply 18 capable of supplying X amperes of current, each electrode 12 is limited by the resistor 16 so that not more than X/8 amperes flow through each electrode.

A collecting electrode 20 is in opposed position and is spaced from the face of the print head 10 by a fixed distance which is sufficient to permit a ribbon 22 and paper or like record media 24 to be driven or transported in a horizontal direction through the gap between the print head and the collecting electrode. The collecting electrode 20 is supported by means which is insulated from ground potential and therefore is electrically floating with respect to the print head 10.

The control circuitry is connected with the collecting electrode 20 and includes switching means to provide a control or gate signal for a period of time for controlling the flow of electrical current to the electrodes 12, and the electrical discharges will occur at the interfaces between the needle electrodes 12 and the collecting electrode 20. A solid state electronic switching device used in the control circuitry of the present invention may be IRF 330 series as made by International Rectifier, or G64LS series as made by General Electric. These switching devices are capable of supporting high voltages and also rapid switching in the range of 50-100 kilohertz or in the range of 10-20 microseconds between electrical discharges. An example of the speed of switching by means of utilization of such devices is that for a bar-to-bar spacing of 0.88 millimeters and a total field of 116 bars, the entire identification code can be printed in 1-2 milliseconds. The spacing of the needle electrodes 12 is selected so that a vertical line of closely spaced printed dots results in a bar or solid line code format. The ribbon 22 is of the thermal sensitive type and uses a base material of cellophane or polyethylene with a suggested fluorescent ink to provide a unique identification code so as to distinguish between MICR and printing ink and also to maintain invisibility to "image lift" processing. The paper 24 is standard, plain, untreated paper for use in different thicknesses of documents.

Fig. 1 shows the arrangement for use in the present invention when gap breakdown voltages up to 1 kilovolt are required and the General Electric G64LS series switching device is used in the circuit. When the G64LS switching device 30 is turned on, the collecting electrode 20 is brought to ground potential allowing a strong electric field to be set up across the gap, thereby breaking down the gap to allow current flow and cause transfer of ink from the ribbon to the paper. A snubber circuit 32 comprising a 0.1 microfarad capacitor 34, a 100 ohm resistor 36 and a diode 38 is connected to the collector of the transistor device 30 to reduce the effect of switching losses.

A pulse of 4 volts input is used to control the electronic circuitry which also includes a pair of switching devices or transistors comprising an NPN type device 40 with a 1,000 ohm resistor 42 connected thereto and a PNP type device 44 with a 1,000 ohm resistor 46 connected thereto. A 10 ohm resistor 48 is inserted in the lead from a 12 volt supply pulse and a 1/2 ohm resistor 50 is in the lead between the transistors 40 and 44 and the transistor 30.

The length of time that current flows across the gap between the face of the print head 10 and the collecting electrode 20 is determined by the length of time that the pulse of 4 volts is maintained at the control pulse input. The length of time of this control pulse determines the width of each bar in a bar code that is printed by the discharging of the electrodes 12 for the length of time that current is maintained across the gap.

Fig. 2 shows another arrangement wherein a thicker paper is used for the documents. An example is that where 100 pound weight check paper 52 is transported or is caused to be driven along with the ribbon 54 in a gap of 0.15 millimeters between the face of the print head 56 and a collecting electrode 58, a higher voltage of 4 kilovolts is required to accomplish the printing operation. A current limiting resistor 60 is placed in each lead to the electrode 62 and the leads are collectively connected to a pulsed high voltage switching circuit 64.

The pulsed high voltage supply consists of a three stage voltage multiplier circuit. The concept of the high voltage switching circuit is illustrated in part in Fig. 3 wherein during the charging cycle the capacitors 70 and 72 are charged in parallel to the rail or bus voltage at one kilovolt. At this time of the operating cycle, switches 74 & 76 are closed and switches 78 & 80 are open. Thus at the end of this charging cycle time period, one kilovolt exists across each of the capacitors 70 and 72.

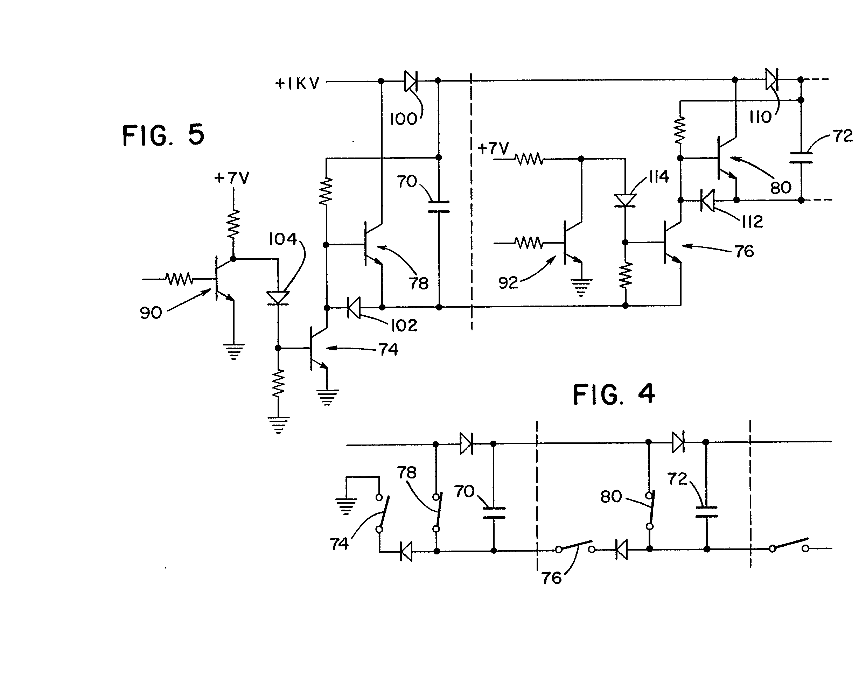

Fig. 4 illustrates the mulitplying cycle wherein switches 74 and 76 are opened and switches 78 and 80 are closed. Since the capacitor 70 was initially charged to one kilovolt during the charging cycle, the closing of switch 78 boosts the voltage at the top of capacitor 70 from one kilovolt to two kilovolts. This voltage then appears at the bottom of capacitor 72 and since this capacitor was initially charged to one kilovolt the two kilovolt pulse boosts the voltage at the top of capacitor 72 to three kilovolts.

In theory this process of initiating charging and multiplying cycles can be repeated but in actual practice the maximum attainable voltage is limited by the breakdown voltage of the individual components. The concept of this circuit involves the steps of charging a number of capacitors in parallel and then connecting the capacitors in series during the mulitplying time period. Assuming that all capacitors in the circuit are of equal value, the total available charge is given by the equation:

$$Q = (C/N) \ (V)(n + 1)$$

where    C = value of single stage capacitor

n = number of stages

Q = available output charge.

Fig. 5 shows the detailed representation of two of the three stages. When no control pulse is present at the base of either transistor 90 or transistor 92, the base of the switching device or transistor 74 and the base of transistor 76 are forward biased and the charging cycle is in process. When a five volt pulse is applied to the base of the transistor 90, such transistor is turned on to bring the collector to approximately 0.2 volts. This voltage turns transistor 74 off and turns transistor 78 on and provides one kilovolt at the bottom of capacitor 70, thereby boosting the voltage at the top of capacitor 70 to two kilovolts. This voltage potential of one kilovolt across capacitor 70 reverse biases diode 100 and diode 102. Furthermore, diode 114 becomes reverse biased, seven volts on the anode and one kilovolt on the cathode, thereby turning off the transistor 76 and turning on the transistor 80. This switching action cascades down the rest of the stages to produce the maximum available high voltage. To produce the maximum voltage, only the base of transistor 90 is gated. To produce the maximum high voltage (1 kilovolt), transistor 74 is always on and transistor 78 is always off and the voltage at the bottom of capacitor 70 is at a figure of only one diode voltage drop above ground potential. Thus the top of capacitor 70 will remain at one kilovolt and no boosting impulse voltage will occur. The system now functions as if one of the stages is not present, thereby reducing the available output voltage. Diode 104 is positioned in the circuit between transistor 74 and transistor 90, and diodes 110 and 112 are placed in the second stage and perform in similar manner as the diodes of the first stage.

The figure of four kilovolts for the high voltage has been experimentally determined to be adequate to cover the different thicknesses of bank checks or like documents. The electrical breakdown of the gap between the face of the print head and the collecting electrode can be separated into two components. These components comprise the statistical time lag caused by the need for an electron to appear in the gap during the period of application of the voltage in order to initiate the discharge and the formative time lag corresponding to the time required for the spark discharge to develop across the gap.

The formative time lag will depend on the gap distance and the driving or applied electrical potential. The choice of the high voltage potential has to insure that, in the short time the high voltage is applied, the electric field set up in the gap is sufficient to attract an electron to initiate discharge. The presence or absence of an electron is clearly a statistical quantity which depends on the amount of preionization of the gap. The DC breakdown potential of a gap can clearly be lower than the pulsed breakdown potential since in the DC case a sufficiently long time can be taken for the appearance of an electron to initiate discharge. In the pulsed mode operation, a short time exists to insure the occurrence of the breakdown across the gap and a higher gap voltage accomplishes the result.

It is assumed that the higher gap voltage could be reduced by supplying initiating breakdown electrons from radioactive sources or by ultraviolet illumination. It is a possibility that illuminating the spark gap with a mercury arc lamp should supply a sufficient number of electrons to lower the breakdown potential below the normal DC value.

Although a print head 10 consisting of several needle "point" electrodes 12 positioned directly opposite a "line" or "plane" collecting electrode 20 has been described herein, it is within the realm of those skilled in the art to modify the geometry to include "point to point" structure. Such structure would consist of the several needle electrodes 12 contained in the present print head 10 and a receiving or collecting means comprising several needle electrodes corresponding to and directly opposite those the print head. In this configuration the collecting electrodes could be either individually controlled or group controlled in electronic manner.

Claims

1.        A non-impact bar code printer including first and second electrode means (12,20;62,58) spaced from one another to provide an air gap therebetween for accommodating in operation an ink bearing means (22,54) and a record medium (24,52) and generating means (64) for producing an electric field between said first and second electrode means (12,20;62,58) to cause transfer of ink particles from said ink bearing means (22,54) to the record medium (24,52), characterized in that said generating means (64) is arranged to produce an electrical potential across said first and second electrode means (12,20;62,58) of a magnitude exceeding the gap breakdown voltage causing a flow of discharge current therebetween affecting heating of said ink bearing means (22,54) and transfer and bonding of ink materials to said record medium (24,52), and in that control means are provided for controlling the duration of said discharge current flow so as to determine in operation the width of each printed bar.

2.        A printer according to Claim 1, characterized in that at least one of said first and second electrode means (12,20;62,58) comprises a plurality of needle electrodes (12,62) disposed in a linear array.

3.        A printer according to either claim 1 or 2, characterized in that said control means includes electronic switching means (90,92) for varying the time that discharge current flow is maintained across said air gap.

4.        A printer according to either claim 1 or 2, characterized in that said control means includes means (74,76,78,80) for initiating a charging cycle and a multiplying cycle to obtain the electric potential of sufficient magnitude to exceed the gap breakdown voltage.

5.        A printer according to claim 4, characterized in that said generating means (64) includes a plurality of capacitors (70,72) connected in parallel during the charging cycle and connected in series during the multiplying cycle.

- 12 -

6.      A printer according to claim 1, characterized in that said generating means include a single high voltage DC source.

7.      A printer according to claim 1, characterized by current limiting means (16,60) effective to limit the current flowing through said first electrode means, (12,62).

8.      A printer according to claim 1, characterized in that said ink bearing means (22,54) is a thermally sensitive ribbon.

9.      A method of printing a bar code on a record medium (24,52) by placing the record medium and ink bearing means (22,54) between electrically conducting electrode means (12,20;62,58) having an air gap therebetween, and producing an electrical field between the electrode means (12,20;62,58) to cause transfer of ink particles from said ink bearing means (22,54) to the record medium, (24,52), characterized by producing an electrical potential across said electrode means (12,20;62,58) of a magnitude exceeding the gap breakdown voltage so as to cause a flow of discharge current therebetween which current effects heating of said ink bearing means (22,54) and transfer and bonding of ink material to said record medium (24,52), and controlling the duration of said discharge current flow so as to determine the width of each printed bar.

10.     A method according to claim 9, characterized in that the electrical potential of sufficient magnitude is produced by establishing a charging cycle in which a plurality of capacitors (70,72) in parallel are charged and then establishing a multiplying cycle in which the capacitors are connected in series to multiply the potential.

## FIG. 1

## FIG. 2

## FIG. 3

FIG. 5

FIG. 4